# EUROPÄISCHE PATENTANMELDUNG

(11) **EP 0 631 120 A1**
(43) Veröffentlichungstag der Anmeldung: **28.12.1994**
(21) Anmeldenummer: 94109032.6
(22) Anmeldetag: 13.06.1994
(51) Int. Cl.: G01K 13/06

(54) **Einrichtung zur berührungslosen Messung der Temperatur eines bewegten langgestreckten Körpers**

(30) Priorität: 23.06.1993 DE 4320879
(71) Anmelder: B a r m a g AG, D-42897 Remscheid (DE)
(72) Erfinder: Mink, Wilfried, D-42369 Wuppertal (DE)
(74) Vertreter: Kahlhöfer, Hermann, Dipl.-Phys.

(57) **Zusammenfassung**

Einrichtung zur Messung der Temperatur eines entlang einer Bewegungslinie bewegten langgestreckten Objektes (10), insbesondere eines laufenden Fadens (10), wobei das Objekt (10) eine auf einer im wesentlichen konstanten Referenztemperatur gehaltene Meßkammer (11) durchlaufen kann, in der eine Sensorfläche so angeordnet ist, daß eine Wärmeübertragung zwischen Sensorfläche und Objekt (10) stattfinden kann und wobei ein der Wärmeübertragung proportionales Ausgangssignal gebildet werden kann, wobei erfindungsgemäß mindestens zwei sich gegenüberliegende Sensorflächen (6, 7) in der Meßkammer (11) vorhanden sind, zwischen denen sich das Objekt (10) hindurchbewegt. Vorzugsweise sind die zwei Sensorflächen (6, 7) symmetrisch in Bezug auf die Bewegungslinie des Objektes (10) angeordnet und gestaltet. Dabei haben die zwei Sensorflächen (6, 7) in einer ersten Richtung senkrecht zur Bewegungslinie und senkrecht zu ihrem Abstand eine Ausdehnung haben, die größer als die insgesamt in dieser ersten Richtung zulässige Abweichung des Objektes (10) von der Bewegungslinie ist. Außerdem haben die Sensorflächen (6, 7) untereinander und in einer zweiten Richtung senkrecht zur Bewegungslinie einen Abstand, der geringfügig größer als die insgesamt in dieser zweiten Richtung zulässige Abweichung des Objektes (10) von der Bewegungslinie ist.

## Beschreibung

Die vorliegende Erfindung betrifft eine Einrichtung zur Messung der Tempetratur eines entlang einer Bewegungslinie bewegten langgestreckten Objektes, insbesondere eines laufenden Fadens. Eine solche Einrichtung ist beispielsweise aus der DE 21 36 564 C2 bekannt. In dieser Schrift ist eine Messkammer beschrieben, die im wesentlichen auf einer konstanten Referenztemperatur gehalten wird und in der eine Sensorfläche so angeordnet ist, daß eine Wärmeübertragung zwischen Sensorfläche und Objekt stattfinden kann, wobei ein der Wärmeübertragung proportionales Ausgangssignal gebildet werden kann. Die bekannte Vorrichtung dient insbesondere zur berührungslosen Messung der Temperatur eines schnellaufenden Fadens in einer Textilmaschine, ist jedoch auch für andere Anwendungen geeignet. Das Problem der Tempetarumessung an bewegten Objekten stellt sich beispielsweise bei der Herstellung von Bändern aus den verschiedensten Werkstoffen, bei der Wärmebehandlung von Kunststoffen in Form von Bahnen, Platten, Drähten oder Fäden, bei der Papierverarbeitung, insbesondere beim Beschichten oder Verleimen von Papieren, beim Verkleben von Flächenmaterial, beim Härten von Klebstoffen und Beschichtungen, beim Trocknen von Naßbeschichtungen, insbesondere von Anstrichen oder bei der Überwachung bewegter Maschinenteile.

Die Funktionsweise der Erfindung wird beispielhaft im folgenden anhand der Temperaturmessung an einem laufenden Faden beschrieben, ist jedoch nicht auf diesen Anwendungsfall beschränkt.

Das Meßprinzip bei der im Stand der Technik bekannten Meßanordnung besteht darin, daß die Sensorfläche in der Meßkammer sich genau auf der Referenztemperatur befindet, wenn das zu messende Objekt ebenfalls diese Temperatur hat. Wird allerdings ein kälteres oder wärmeres Objekt an der Sensorfläche vorbeigeführt, so ändert sich durch Wärmeübertragung, d.h. durch Strahlung und/oder Konvektion die Temperatur der Sensorfläche. Diese Temperaturänderung kann beispielsweise durch einen von der Tempertaur abhängigen Widerstand, insbesondere im Vergleich zu einem auf der Referenztemperatur befindlichen Referernzwiderstand, gemessen werden.

Dieses bekannte Meßprinzip ist vom Konzept her für genaue Messungen geeignet, jedoch spielt der Abstand des an der Sensorfläche vorbeigeführten Objektes eine entscheidende Rolle bei der Wärmeübertragung. Wenn daher der Abstand des Objektes von der Sensorfläche nicht exakt eingehalten wird, wird die Messung erheblich verfläscht.

Eine weiterentwickelte Einrichtung zur berührungslosen Temperaturmessung ist in der Zeitschrift Chemiefasern/Textilindustrie, 41./93. Jahrgang, November 1991,
in dem Artikel "Neue Einrichtung zur berührungslosen Temperaturmessung" beschrieben. In dem dort beschriebenen Gerät wird das Problem der Kalibrierung durch Hintereinanderanordnung von zwei identischen Sensorflächen und Auswertung beider Meßergebnisse mittels eines Mikroporzessors gelost. Auch in diesem Dokument ist jedoch das Problem eines unterschiedlichen Abstandes des Meßobjektes zur Sensorfläche nicht gelöst.

Bei schnell bewegten Objektes, insbesondere schnellaufenden Fäden, die sich mit einer Geschwindigkeit von beispielsweise 1000 m/min bewegen können, kommt es im allgemeinen zu Schwingungen oder einem Flattern, so daß ein konstanter Abstand zu einer Sensorfläche kaum eingehalten werden kann. Aufgabe der vorliegenden Erfindung ist es daher, eine Einrichtung zu schaffen, welche genaue Meßergebnisse auch bei Schwingungen oder einem Flattern des bewegten Objektes ermöglicht. Dabei soll die Auswertung der Ausgangssignale möglichst einfach und genau sein.

Zur Lösung dieser Aufgabe dient eine Einrichtung zur Messung der Temperatur eines entlang einer Bewegungslinie bewegten langgestreckten Objektes, insbesondere eines laufenden Fadens, wobei das Objekt eine auf einer im wesentlichen konstanten Referenztemperatur gehaltene Meßkammer durchlaufen kann, in der eine Sensorfläche so angeodnet ist, daß eine Wärmeübertragung zwischen Sensorfläche und Objekt stattfinden kann und wobei ein der Wärmeübertragung proportionales Ausgangssignal gebildet werden kann. Erfindungsgemäß sind in dieser Einrichtung mindestens zwei sich gegenüberliegende Sensorflächen in der Meßkammer vorhanden, zwischen denen sich das Objekt hindurchbewegt. Der Vorteil dieser Einrichtung liegt darin, daß bei einem Schwingen oder Flattern des Objektes sich dieses zwar von einer Sensorfläche entfernt, gleichzeitig aber der anderen Sensorfläche näherkommt. Der Wärmeaustausch zur ersten Sensorfläche nimmt in diesem Falle ab, während der Wärmeaustausch mit der zweiten Sensorfläche zunimmt. In erster Näherung, die für viele Anwendungszwecke ausreicht, gleichen sich diese Effekte aus, so daß bei Auswertung der Ausgangssignale beider Sensorflächen ein sehr genaues Meßergebnis gewonnen werden kann.

Besonders günstig ist es, wenn die Sensorflächen symmetrisch in bezug auf die Bewegungslinie des Objektes angeordnet und gestaltet sind, da dann der beste Ausgleich zwischen den Meßsignalen bei Lageänderungen des Objektes erfolgen kann.

Wie anhand der Zeichnung näher erläutert wird, haben die Sensorflächen, um eine Berührung mit dem Objekt zu vermeiden, einen Abstand a und sollten bevorzugt in einer ersten Richtung senkrecht zur Bewegungslinie und senkrecht zu ihrem Abstand eine Ausdehnung h haben, die größer als die insgesamt in dieser ersten Richtung zulässige Abweichung d1 des Objektes von der Bewegungslinie ist. Auf diese Weise wird zunächst sichergestellt, daß Schwingungen oder ein Flattern des Objektes parallel zu den beiden Sensorflächen praktisch keinen Einfluß auf die Wärmeübertragung und damit das Ausgangssignal hat. Wenn die Ausdehung h der Sensorflächen deutlich größer als die maximale Abweichung des Objektes von der Bewegungslinie ist, liegt das Objekt trotz evtl. Abweichungen d1 immer noch überall den Sensorflächen gegenüber. Insbesondere ist es günstig, wenn die Ausdehnung h größer als der Abstand a ist. Dabei muß der Abstand a der Sensorflächen untereinander in einer zweiten Richtung senkrecht zur Bewegungslinie geringfügig größer sein, als die insgesamt in dieser zweiten Richtung zulässige Abweichung d2 des Objektes von der Bewegungslinie. In diesem Falle wird auch bei einem Schwingen oder Flattern des Objkektes sichergestellt, daß dieses nicht die Sensorflächen berührt.

Wie beim Stand der Technik ist es auch für die erfindungsgemäße Einrichtung zur Vermeidung von Störeinflüssen besonders vorteilhaft, daß die Sensorflächen in einem beheizbaren, auf der Referenztemperatur thermostatisierbaren, gegenüber der Umgebung wärmeisolierten Block angeordnet sind. Auf diese Weise wird die Messung unabhängig von der Umgebungstemperatur, und die Referenztemperatur kann in den Bereich der zu messenden Temperaturen eingestellt werden, wodurch die Genauigkeit der Messung erheblich zunimmt.

Besonders günstig ist es, wenn in der Einrichtung zwei passive Referenzsensoren vorhanden sind, welche sich auf der Referenztemperatur befinden. Abweichungen der an den Sensorflächen gemessenen Temperaturen von den an den passiven Referenzsensoren gemessenen Temperaturen können so mit großer Genauigkeit als Differenzmessungen bestimmt werden.

Um Störeinflüsse durch Luftbewegungen außerhalb der Meßkammer zu vermeiden, sollte diese nur einen kleinen, vorzugsweise verschließbaren, Schlitz etwa in Richtung der Bewegungslinie zum Einlegen des Objektes aufweisen. Grundsätzlich kann die Meßkammer auch ohne Schlitz ausgebildet sein, wobei allerdings dann das Objekt nicht eingelegt werden kann, sondern durch die Meßkammer eingefädelt werden muß.

Wichtig ist auch, daß das Objekt durch möglichst Kleine Öffnungen in die Meßkammer eintritt bzw. diese verläßt. Unter einer möglichst kleinen Öffnung ist dabei eine Öffnung zu verstehen, die zwar genügend groß ist, daß auch ein schwingendes oder flatterndes Objekt die Wände nicht berührt, jedoch nicht wesentlich größer. Auch durch diese Maßnahme wird eine unerwünschte Störung der Messung durch Umgebungseinflüsse vermindert.

Grundsätzlich können für die Sensorflächen beliebige Arten von Temeraturfühlern verwendet werden, jedoch ist es besonders vorteilhaft, die Temperaturmessungen mittels von der Temperatur abhängiger elektrischer Widerstände durchzuführen. Entweder können die Sensorflächen selbst solche elektrische Widerstände sein oder aber gut wärmeleitend mit solchen Widerständen verbunden sein. Besonders günstig ist es beispielsweise, wenn die Sensorflächen mit dünnen, ggf. mäandrierenden Schichten aus Platin oder ein Platinlegierung versehen sind, deren Widerstand von der Temperatur abhängig ist.

Die passiven Referenzsensoren sollten vorzugsweise im wesentlichen baugleich zu den an den Sensorflächen verwendeten elektrischen Widerständen sein, wodurch die Differenzmessung zwischen beiden Arten von Sensoren die höchste Genauigkeit erreicht.

Als Meßprinzip für hohe Genauigkeit besonders geeignet ist eine Vollbrückenschaltung, in der die elektrischen Widerstände der Sensorflächen jeweils benachbart mit den Widerständen der passiven Referenzsensoren zu einer Vollbrücke verbunden sind, wie anhand der Zeichnung noch näher erläutert wird.

Ein Ausführungsbeispiel der Erfindung, auf die diese jedoch nicht beschränkt ist, ist in der Zeichnung dargestellt und zwar zeigen:
- Fig. 1: Einen Querschnitt durch eine erfindungsgemäße Einrichtung;
- Fig. 2: Eine schematische Darstellung der Größenverhältnisse in der Meßkammer aus Fig. 1;
- Fig. 3: Ein Ausführungsbeispiel für die elektrische Verschaltung der erfindungsgemäßen Einrichtung.

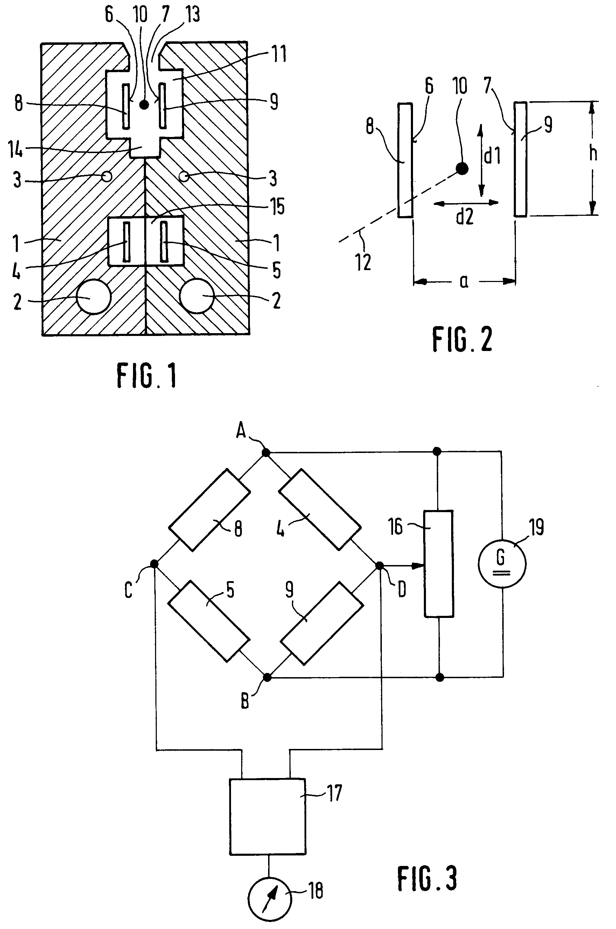

Fig. 1 zeigt einen gut wärmeleitenden Block 1, vorzugsweise aus Metall, welcher aus zwei Hälften zusammengesetzt sein kann, um die Fertigung zu erleichtern. In den Block 1 ist eine Heizung 2 integriert, welche von einem Temperaturfühler 3 und einer zugehörigen (nicht dargestellten) Regeleinrichtung möglichst exakt auf einer vorgegebenen Referenztemperatur gehalten wird, so daß der Block 1 insgesamt die Referenztemperatur annimmt. In dem Block befindet sich eine Referenzkammer 15 mit zwei passiven Referenzsensoren 4, 5. Die Referenzkammer und die darin befindlichen Referenzsensoren 4, 5 nehmen, da sie vollständig von dem Block 1 umschlossen sind, genau die Referenztemperatur an. Weiter befindet sich in dem Block 1 eine Meßkammer 11, durch welche ein langestrecktes Objekt 10, im vorliegenden Falle ein Faden, geführt ist. Zum Stand der Technik gehörende Mittel, mit der der Faden 10 und die Meßeinrichtung relativ zu einander so angeordnet werden, daß der Faden 10 möglichst genau in der Mitte der Meßkammer 11 verläuft, sind nicht dargestellt. Es handelt sich um bekannte Fadenhalter, Umlenkrollen oder dergleichen. In der Meßkammer 11 sind zwei einander im Abstand klein a gegenüberliegende Sensorflächen 6, 7 vorhanden, welche einen von der Temperatur abhängigen elektrischen Widerstand 8 bzw. 9 aufweisen oder mit einem solchen elektrischen Widerstand gut wärmeleitend verbunden sind. Besonders günstig ist eine Ausführung der Sensorflächen in Form von mit Platin bedampften Glasscheiben. Der Faden 10 kann durch einen Schlitz 13 in die Meßkammer 11 eingelegt werden, wodurch ein umständliches Einfädeln vermieden wird. Zur weiteren Verminderung von Störeinflüssen kann der Schlitz 13 nach dem Einlegen des Fadens 10 mit einer nicht dargestellten Abdeckung versehen werden. Eine dem Schlitz 13 gegenüberliegende Ausbuchtung 14 in der Meßkammer 11 bewirkt einen Ausgleich für das Vorhandensein des Schlitzes 13 in Bezug auf die Wärmeflüsse.

Fig. 2 veranschaulicht schematisch die Größenverhältnisse in der Meßkammer 11. Die Sensorflächen 6, 7 haben einen Abstand a, und der Faden 10 soll sich im optimalen Zustand entlang der Bewegungslinie 12 in der Mitte zwischen den Sensorflächen 6, 7 bewegen. Tatsächlich kann der Faden 10 jedoch schwingen oder flattern und zwar mit einer zulässigen Abweichung d1 in einer ersten Richtung senkrecht zum Abstand a und mit einer zulässigen Abweichung d2 in einer zweiten Richtung parallel zum Abstand a. Die Sensorflächen 6, 7 haben in der ersten Richtung eine Ausdehnung h, die größer als die zulässige Abweichung d1 in dieser Richtung ist. Auf diese Weise befindet sich der Faden 10 auch bei maximal zulässiger Abweichung noch zwischen den Sensorflächen 6, 7, so daß Abweichungen in der ersten Richtung praktisch keine Änderungen des Meßsignals bewirken. Gleichzeitig ist der Abstand a in der zweiten Richtung größer als die zulässige Abweichung d2 des Fadens 10 in dieser. Dadurch kann der Faden 10 auch bei starken Abweichungen in der zweiten Richtung nicht die Sensorflächen 6, 7 berühren. Außerdem wird bei einer solchen symmetrischen Anordnung von zwei gegenüberliegenden Sensorflächen 6, 7 in erster Näherung eine Kompensation des durch Abweichungen des Fadens 10 in der zweiten Richtung an sich verursachten Meßfehlers erreicht. Entfernt sich der Faden 10 beispielsweise von der einen Sensorfläche 6, so nähert er sich gleichzeitig der anderen Sensorfläche 7 an. Der Wärmeaustausch mit der Sensorfläche 6 wird kleiner, der mit der Sensorfläche 7 wird größer. Bei einer geeigneten elektronischen Verschaltung, beispielsweise der in Fig. 3 dargestellten, kompensieren sich die auftretenden Unterschiede praktisch vollständig, so daß selbst bei einem schwingenden oder flatternden Faden ein sehr genaues Meßsignal erhalten wird.

Fig. 3 zeigt ein Ausführungsbeispiel für eine einfache, aber wirkungsvolle und genau messende elektrische Verschaltung der Meßeinrichtung in Form einer Vollbrückenschaltung. Die bei den temperaturabhängigen den Sensorflächen 6, 7 zugeordneten elektrischen Widerstände 8, 9 werden mit den passiven Referenzsensoren 4, 5 abwechselnd zu einer Vollbrücke ringförmig verschaltet. Mittels einer Gleichspannungsquelle 19 wird an die Verbindungspunkte von je einem Meßwiderstand und einem Referenzwiderstand eine Gleichspannung aus einer Gleichspannungsquelle 19 angelegt. Parallel zu der Gleichspannungsquelle 19 liegt ein Widerstand 16, der über eine Potentiometerschaltung mit einem dritten Verbindungspunkt D der Brückenschaltung verbunden ist. Weiter ist mit den Verbindungspunkten C und D ein Verstärker 17 verbunden, welcher ein Ausgangssignal an eine Anzeigeeinrichtung 18 liefert. Mittels der Potentiometerschaltung am Widerstand 16 läßt sich der Nullpunkt der Brückenschaltung nachstellen, um eine größtmögliche Meßgenauigkeit zu erzielen. Die Funktionsweise der Schaltung beruht auf dem unterschiedlichen Spannungsabfall an den Referenz- bzw. Meßwiderständen je nach Temperatur und Lage des Fadens. Ist der Faden beispielsweise heißer als die Referenztemperatur, so fällt ein den Meßwiderständen 8, 9 eine höhere Spannung ab als an den Referenzwiderständen 4, 5. Dies macht sich an dem Ausgangssignal bzw. an einer Verschiebung des Nullpunktes bemerkbar. Wird nun der Faden beispielsweise näher zum Meßwiderstand 8 als zum Meßwiderstand 9 bewegt, so fällt am Widerstand 8 eine höhere Spannung ab als am Widerstand 9, was sich in bezug auf das Ausgangssignal in erster Näherung gerade aufhebt, so daß eine Lageverschiebung des Fadens keine Auswirkung auf das Meßergebnis hat.

Die vorliegende Erfindung eignet sich besonders für eine genaue Temperaturmessung an schnell laufenden Fäden, Bändern, Folienbahnen und dgl. unter Produktionsbedingungen.

## Patentansprüche

1. Einrichtung zur Messung der Temperatur eines entlang einer Bewegungslinie (12) bewegten langgestreckten Objektes (10), insbesondere eines laufenden Fadens (10), wobei das Objekt (10) eine auf einer im wesentlichen konstanten Referenztemperatur gehaltene Meßkammer (11) durchlaufen kann, in der eine Sensorfläche so angeordnet ist, daß eine Wärmeübertragung zwischen Sensorfläche und Objekt (10) stattfinden kann und wobei ein der Wärmeübertragung proportionales Ausgangssignal gebildet werden kann,
dadurch gekennzeichnet,
daß mindestens zwei sich gegenüberliegende Sensorflächen (6, 7) in der Meßkammer (11) vorhanden sind, zwischen denen sich das Objekt (10) hindurchbewegt.

2. Einrichtung nach Anspruch 1, dadurch gekennzeichnet, daß die zwei Sensorflächen (6, 7) symmetrisch in Bezug auf die Bewegungslinie (12) des Objektes (10) angeordnet und gestaltet sind.

3. Einrichtung nach Anspruch 1 oder 2, dadurch gekennzeichnet, daß die zwei Sensorflächen (6, 7) in einer ersten Richtung senkrecht zur Bewegungslinie (12) des Objektes (10) und senkrecht zu ihrem Abstand (a) eine Ausdehnung (h) haben, die größer als die insgesamt in dieser ersten Richtung zulässige Abweichung (d1) des Objektes (10) von der Bewegungslinie (12) ist.

4. Einrichtung nach einem der vorhergehenden Ansprüche, dadurch gekennzeichnet, daß die Sensorflächen (6, 7) untereinander und in einer zweiten Richtung senkrecht zur Bewegungslinie (12) einen Abstand (a) haben, der geringfügig größer als die insgesamt in dieser zweiten Richtung zulässige Abweichung (d2) des Objektes (10) von der Bewegungslinie (12) ist.

5. Einrichtung nach einem der vorhergehenden Ansprüche, dadurch gekennzeichnet, daß die Sensorflächen (6, 7) in einem beheizbaren auf der Referenztemperatur thermostatisierbaren gegenüber der Umgebung wärmeisolierten Block (1) angeordnet sind.

6. Einrichtung nach einem der vorhergehenden Ansprüche, dadurch gekennzeichnet, daß in der Einrichtung zwei passive Referenzsensoren (4, 5) vorhanden sind, welche sich auf der Referenztemperatur befinden.

7. Einrichtung nach einem der vorhergehenden Ansprüche, dadurch gekennzeichnet, daß die Meßkammer (11) nur einen kleinen, vorzugsweise verschließbaren, Schlitz (13) etwa in Richtung der Bewegungslinie (12) zum Einlegen des Objektes (10) aufweist.

8. Einrichtung nach einem der vorhergehenden Ansprüche, dadurch gekennzeichnet, daß das Objekt (10) durch möglichst kleine Öffnungen in die Meßkammer (11) eintritt bzw. diese verläßt.

9. Einrichtung nach einem der vorhergehenden Ansprüche, dadurch gekennzeichnet, daß die zwei Sensorflächen (6, 7) einen von der Temperatur abhängigen elektrischen Widerstand (8, 9) haben oder mit diesen Flächen je ein von der Temperatur abhängiger elektrischer Widerstand (8, 9) gut wärmeleitend verbunden ist.

10. Einrichtung nach Anspruch 9, dadurch geknnzeichnet, daß die von der Temperatur abhängigen elektrischen Widerstände (8, 9) aus dünnen Schichten Platin oder Platinlegierung bestehen.

11. Einrichtung nach Anspruch 6 und 9, dadurch gekennzeichnet, daß die passiven Referenzsensoren (4, 5) von der Temperatur abhängige Widerstände sind, vorzugsweise im wesentlichen baugleich zu den elektrischen Widerständen (8, 9) der Sensorflächen (6, 7).

12. Einrichtung nach Anspruch 11, dadurch gekennzeichnet, daß die passiven Referenzsensoren (4, 5) und die elektrischen Widerstände (8, 9) der Sensorflächen (6, 7) zu einer Vollbrückenschaltung (A, D, B, C) verschaltet sind, bei der die elektrischen Widerstände (8, 9) der Sensorflächen (6, 7) je benachbart mit den Widerständen der passiven Referenzsensoren (4, 5) zu einer Vollbrücke verbunden sind.
